# FASCICULE DE BREVET EUROPEEN

(11) **EP 0 378 136 B1**
(45) Date de publication et mention de la délivrance du brevet: **16.02.1994**
(21) Numéro de dépôt: 90100269.1
(22) Date de dépôt: 08.01.1990
(51) Int. Cl.: A47J 17/04

(54) **Coupe agrume**
Messer zum Schälen von Citrusfrüchten
Citrus fruit pulp cutter

(30) Priorité: 13.01.1989 US 296788
(43) Date de publication de la demande: 18.07.1990
(73) Titulaire: Daoust, Gilbert, Boisbriand,Qc J7G 2P8 (CA); Gingras, Michel, Montréal, Qc H1A 3T3 (CA)
(72) Inventeur: Daoust, Gilbert, Boisbriand,Qc J7G 2P8 (CA); Gingras, Michel, Montréal, Qc H1A 3T3 (CA)
(74) Mandataire: Wagret, Frédéric

(56) Documents cités:
- FR-A- 2 628 624
- GB-A- 1 514 153
- US-A- 1 423 490
- US-A- 1 631 854
- US-A- 2 468 282
- US-A- 2 503 097

## Description

### DOMAINE DE L'INVENTION

Cette invention se rapporte à des accessoires de cuisine du type presse-agrumes, mais plus particulièrement destinés à séparer la pulpe de l'agrume de son écorce et à diviser la pulpe en quartiers.

### ETAT DE LA TECHNIQUE

Les agrumes sont des fruits, tels le pamplemousse, l'orange, la mandarine, le kumquat, le citron, et semblables. Ils sont de forme généralement sphérique et sont constitués d'une pulpe intérieure comestible, et d'une écorce extérieure semi-rigide protégeant la pulpe. Un agrume coupé en deux comprend ainsi une pluralité de quartiers en pointes de tarte, chacun comportant une partie tendre, laquelle est comestible et logeé dans une cavité qu'on appelle la loge, et deux cloisons fibreuses opposées, qui sont semi-rigides. Les cloisons fibreuses fusionnent radialement intérieurement avec l'écorce. Des pépins ou graines sont également immobilisés dans la pulpe.

Les accessoires de cuisine connus pour extraire la partie comestible de la pulpe d'un agrume sont habituellement du type dit presse-agrume, par lequel la pulpe est écrasée par un cadre ouvert semi-sphérique constitué de couteaux. La solution ainsi obtenue, laquelle contient la pulpe de même que le contenu fibreux des cloisons fibreuses (sans goût ni valeur nutritive), peut être récupérée et filtrée (afin d'éliminer les graines et les portions fibreuses macroscopiques) avant la consommation.

Il y a également d'autres outils pour extraire la pulpe, notamment des dispositifs pour couper en quartier la pulpe et pour râper l'écorce au niveau de son bord de contact avec la pulpe.

Ainsi, le brevet américain No 2,503,097 délivré en avril 1950 à J. Chavez, décrit-il un dispositif coupe-agrume ayant la forme d'un outil manuel, permettant de sectionner la pulpe du fruit, afin de la segmenter en une pluralité de parties séparées les unes des autres. Un tel dispositif coupe-agrume comporte deux ensembles d'organes de couteaux, installés mobiles l'un par rapport à l'autre:
1) le premier organe de couteau subdivise la pulpe d'une demi-section d'agrume en une pluralité de segments de pulpe, séparés le long de lignes radiales; alors que
2) le second organe de couteau permet de séparer ces segments de pulpe, de l'écorce du fruit.

Le premier organe de couteau du brevet USA 2503097 consiste en une série de lames acérées de forme à peu prés triangulaire, plates, ancrées radialement à l'éxtrémité d'une colonne et sensiblement équidistantes les unes des autres. Le second organe de couteau consiste en une série de couteaux mobiles, courbés, chacun en forme de pelle, articulés sur la colonne de façon à pouvoir s'y déplacer et engager de façon amovible les arêtes extérieures de l'ensemble des lames fixes.

Ces outils sont inefficaces, surtout lorsqu'on tient compte du fait qu'une partie non négligeable de la pulpe restera accrochée à l'écorce, à moins que l'usager ne soit particulièrement patient et soigné dans le maniement d'un tel dispositif coupe-agrume connu.

### BUTS DE L'INVENTION

Le but de l'invention est donc de prévoir un dispositif permettant de diviser en quartiers la pulpe d'agrumes, de même qu'à séparer l'écorce de la pulpe, caractérisé en ce qu'il réduise au minimum les pertes associées à la récupération de la pulpe comestible.

Un but additionnel de l'invention est de prévoir un tel dispositif, qui soit de construction simplifiée et bon marché du point de vue coût de fabrication.

Un autre but de l'invention est de prévoir un tel outil tel que ci-haut décrit, qui soit susceptible de s'adapter à des agrumes de diamètres variés.

### SOMMAIRE DE L'INVENTION

Ainsi, selon l'invention, l'on prévoit un dispositif coupe-agrume permettant de diviser en quartiers la pulpe d'une demi-section d'agrume et de dégager l'écorce de la pulpe, de façon à pouvoir récupérer les quartiers de pulpe, ledit dispositif de coupe comprenant: un organe annulaire rigide; une première bague en un morceau, un certain nombre de couteaux courbés, espacés, faisant saillie vers le haut à partir de ladite première bague à laquelle ils sont raccordés, lesdits couteaux courbés convergeant au niveau d'une région commune d'apex où ils fusionnent, ladite première bague et lesdits couteaux courbés constituant un cadre ouvert extérieur, généralement semi-sphérique, ladite première bague étant coaxiale audit organe annulaire et librement installée sur celui-ci, chacun desdits couteaux ayant un bord de segmentation, allongé, extérieur, biseauté, aiguisé, dirigé radialement vers l'extérieur et du côté opposé de ladite première bague; une deuxième bague; un certain nombre de lames courbées espacées, faisant saillie vers le haut à partir de ladite seconde bague et raccordées à celle-ci, convergeant vers une région commune d'apex au niveau de laquelle elles sont raccordées, le nombre desdites lames étant identique au nombre desdits couteaux, ladite deuxième bague et lesdites lames constituant un cadre ouvert intérieur, généralement semi-sphérique, lesdites lames étant situées radialement à l'intérieur desdits couteaux, ladite seconde bague étant coaxiale audit organe annulaire et solidarisée avec celui-ci, chacune desdites lames ayant un premier bord extérieur, aiguisé, de râpage d'écorce; des moyens de coulissement pour permettre audit cadre extérieur de tourner par rapport audit organe annulaire autour du centre de celui-ci dans une direction de râpage d'écorce; des moyens de barrure pour barrer ledit cadre intérieur audit organe annulaire; chaque lame occupant une position masquée à l'intérieur d'un couteau contigu correspondant, selon une position initiale de rotation dudit cadre extérieur, lesdits bords de râpage étant transversaux auxdits bords de couteaux de division en quartiers et dirigés du côté opposé à ladite direction de rotation de râpage d'écorce dudit cadre extérieur; de sorte que le dispositif puisse être utilisé d'une façon telle que, lorsque ledit cadre extérieur occupe ladite position initiale de rotation, la face plate de ladite demi-section d'agrume est appuyée directement sur ledit cadre extérieur et enfoncée complètement dans celui-ci pour segmenter ou diviser en quartiers ladite pulpe grâce auxdits bords de segmentation des couteaux, et l'écorce est par la suite tournée à la main dans ladite direction de râpage d'écorce, de façon à entraîner en même temps ledit cadre extérieur mais pas ledit cadre intérieur lequel est barré audit organe annulaire, afin de dégager la pulpe de l'agrume de son écorce au moyen desdits bords de râpage d'écorce des lames.

### COURTE DESCRIPTION DES FIGURES DES DESSINS

La figure 1 représente une vue isométrique, partiellement brisée, d'un coupe-agrume selon une première réalisation de l'invention, avant usage, et suggérant de quelle façon la pulpe d'une demi-section d'agrume peut être ainsi coupée;

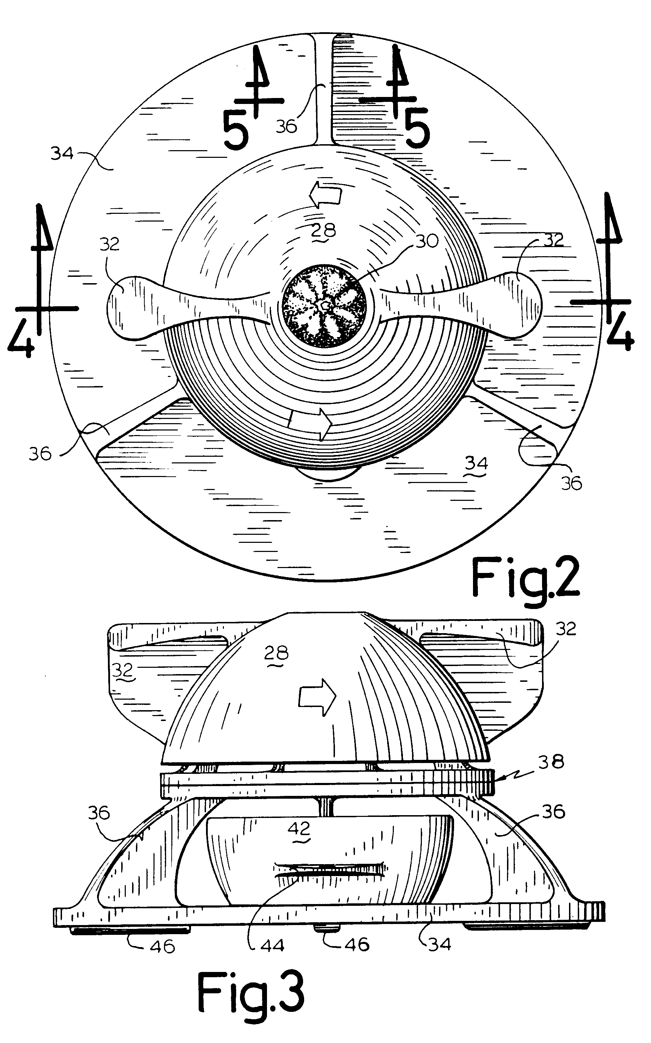

Les figures 2 et 3 sont des vues en élévation de dessus et avant, respectivement, du coupe-agrume, telles qu'on le voit lorsqu'il est utilisé;
Les figures 4 et 5 sont des vues en coupe transversales le long des lignes 4-4 et 5-5 respectivement de la figure 2;
les figures 6 et 6a sont des vues en coupe transversales selon les lignes 6-6 de la figure 4, suggérant de quelle façon l'on peut dégager la pulpe de l'écorce par râpage de la paroi intérieure de l'écorce au moyen du bord biseauté d'une lame du cadre intérieur;
les figures 7 et 8 sont des vues en plan, brisées, du dessus et du dessous, du cadre à couteaux extérieur et du cadre à lames intérieur, respectivement, du coupe-agrume;
la figure 9 est une vue semblable à celle de la figure 1, mais pour une seconde réalisation de l'invention;
les figures 10 et 11 sont des vues isométriques et en plan de dessus, respectivement, du bol supérieur du coupe-agrume de la figure 9;
la figure 12 est une vue en plan de dessus du cadre à couteaux extérieur du coupe-agrume de la figure 9;
la figure 13 est une vue en plan de dessus du cadre à lames intérieur du coupe-agrume de la figure 9; et
les figures 14-15 sont des vues semblables à celles des figures 6-6a, mais pour une seconde réalisation de l'invention.

### DESCRIPTION DETAILLEE DES REALISATIONS DE L'INVENTION

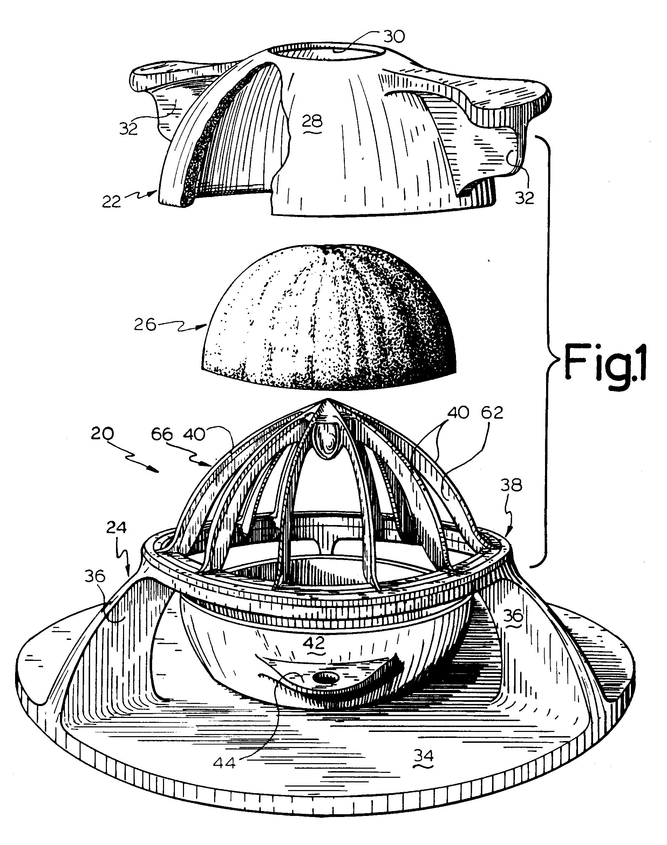

L'on voit à la figure 1 une première réalisation de coupe-agrume 20. Le coupe-agrume 20 comprend une section supérieure en forme de demi-couvercle, 22, et une demi-section inférieure, 24, de sorte qu'une demi-section d'agrume 26 puisse être placée entre les portions 22 et 24 avec la face coupée, circulaire, plate de l'agrume dirigée vers le bas et vers la portion de fruit 24. La partie supérieure 22 comprend un couvercle rigide 28, en forme de tasse inversée, ayant un grand orifice 30 à son apex et deux bras opposés 32 faisant saillie vers l'extérieur, pour faciliter la manipulation de la partie 28. La partie inférieure 24 comprend un disque agrandi, plat, de base, 34, ayant quelques pattes espacées 36 qui sont courbées vers le haut, pour supporter un organe annulaire 38 à diamètre plus petit, parallèlement à la plaque 34. Une pluralité de couteaux extérieurs courbés 40 et une pluralité de lames intérieures, courbées et espacées, 62 font saillie vers le haut à partir du grand organe annulaire 38 vers les plaques d'apex en forme de tasse, 41, 70, respectivement, pour s'y raccorder, afin de constituer un cadre ouvert extérieur semi-sphérique et un cadre ouvert intérieur semi-sphérique, 66, 68 respectivement. Un contenant 42 en forme de tasse est coulissé au-dessus de la base 34, entre deux pattes de support 36, pour venir verticalement en regard des couteaux 40 de façon sensiblement concentrique, pour supporter l'organe annulaire 38. Le récipient 42 peut avoir des poignées transversales 44. Le disque 34 peut aussi avoir quelques pattes en matériau élastomérique, 46, munies d'un recouvrement moleté anti-glissement, 46a, sur sa face de dessous, voir la figure 5.

L'organe annulaire sera maintenant détaillé. Un organe de support annulaire, 48, constituant une partie de la bague 38, est raccordé de façon solidaire au dessus des pattes 36 en leurs bords périphériques internes. L'organe de support 48 comprend un certain nombre d'orifices verticaux 56. Ladite pluralité de lames espacées, courbées, radialement épaisses, 62, font saillie vers le haut d'un organe annulaire de dessous, en un morceau, 50, lequel constitue aussi une partie de l'organe annulaire 38, vers la plaque d'apex en forme de tasse, 70, pour s'y raccorder de façon à constituer un cadre ouvert intérieur semi-sphérique, 68. Les lames 62 et l'organe annulaire 50 sont placés radialement à l'intérieur des couteaux 40, de même que d'une plaque annulaire additionnelle 64 raccordant de façon solidaire l'extrémité inférieure des couteaux 40. Les extrémités inférieures des lames courbées 62 sont raccordées de façon solidaire à un autre organe annulaire de cadre, 52, à sa section de bord de périphérie intérieure. L'organe annulaire 52 constitue la portion solidaire radialement extérieure de l'organe annulaire 50, et s'appuie à plat sur le support annulaire 48. L'organe annulaire 52 comprend une cavité ou retrait annulaire sur sa face supérieure, qui constitue une voie 60 pour recevoir de façon coulissante la plaque annulaire 64 raccordant les couteaux 40, et comprend au surplus un certain nombre de goupilles dirigées vers le bas, 58, engagées de façon amovible dans les orifices verticaux 56 du support annulaire de base, 48.

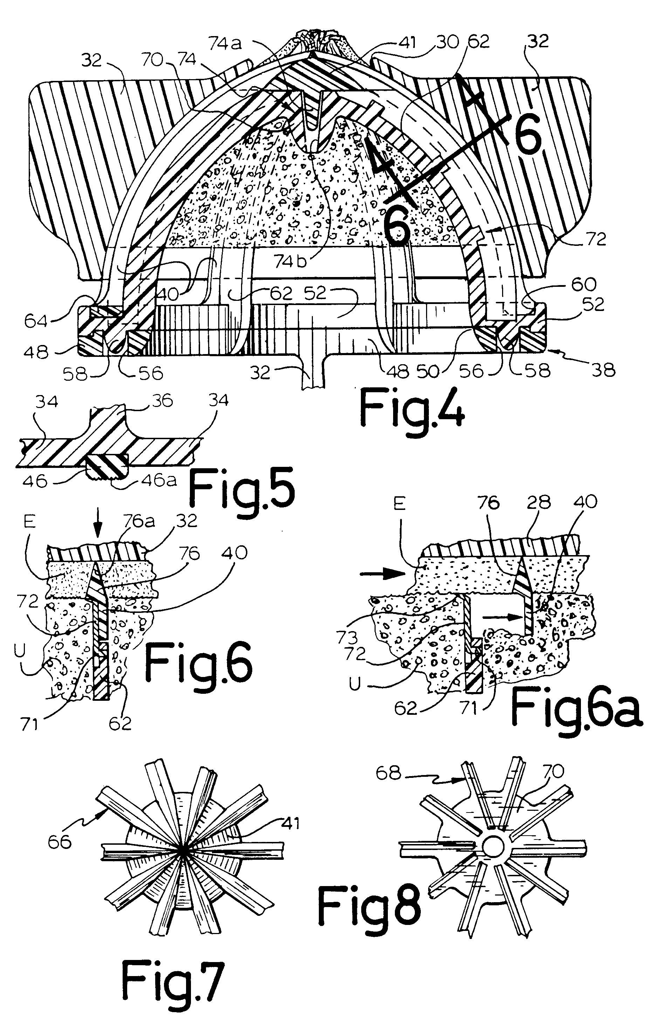

L'examen de la figure 4 révèle que les lames 62 sont barrées de façon amovible au support de base 48 contrairement aux couteaux 40, c'est-à-dire que le cadre ouvert extérieur, semi-sphérique, à couteaux, 66, peut tourner par rapport au cadre ouvert intérieur, semi-sphérique, à lames, 68. Ce déplacement relatif des cadres 66, 68 est facilité par les moyens de guidage 60, 64 qui coopèrent avec l'agencement 74. Une section distincte acérée de lame, 72, est ancrée à chaque corps principal 62 de lame, par un ergot 71. L'agencement 74 comprend une goupille 74a qui dépend vers le bas du centre de la portion d'apex du cadre extérieur en forme de tasse, 41, et une cavité verticale 74b réalisée au centre dans la portion intérieure d'apex du cadre, 70, de sorte que le corps 70 pivote autour de la goupille 74a pendant la rotation relative des cadres 66, 68.

Selon une variante de l'invention, la goupille 74a pourrait être remplacée par un tourillon allongé (non représenté) ayant deux extrémités agrandies, afin de retenir ensemble les apices 41, 70 de cadre, tout en permettant la rotation desdits cadres 66, 68 coaxialement l'un à l'autre.

L'invention s'étend à prévoir des bandes en matériau élastomérique (non illustrées) sur la face intérieure du couvercle 28, pour accroître la force d'agrippement de celui-ci sur l'écorce de l'agrume, lorsque le couvercle 28 est tourné. L'invention s'étend également à un outil de segmentation et de séparation de la pulpe d'un agrume de son écorce, pour des agrumes de dimensions variées, à faible ou important diamètre.

Le bord tranchant 76 de chaque couteau 40, lequel bord tranchant est de section triangulaire et est orienté radialement vers l'extérieur, est illustré aux figures 6-6a. La pointe radialement extérieure 76a des bords transversaux 76 est destinée à cisailler la pulpe U, afin de la segmenter i.e. de la diviser en quartiers. Les parties saillantes 72 des lames 62 comprennent au surplus un bord biseauté transversal pour râper l'intérieur de l'écorce, en 73 sur leurs bords radialement extérieurs, pour permettre un effet de cisaillement entre la pulpe U et l'écorce E dans une seule direction de rotation des couteaux 66, i.e. lorsqu'on veut râper l'écorce de l'agrume 26 afin d'en dégager la pulpe.

Les couteaux 40, 76 sont entrainés en rotation grâce à la rotation du cadre extérieur 66, de sorte que les sections de bord de lame 72 viennent accoter sur la section de couteau 40 (voir la figure 6), de sorte que le bord de râpage 73 de chaque section de lame 72 deviendra masqué par les sections de bord tranchant des couteaux, 76, ce qui permet d'y pousser le fruit avec le couvercle 28 jusqu'à ce que les sections de bord tranchant des couteaux, 76, pénètrent dans la pulpe. Le couvercle empêche donc qu'on se coupe durant le maniement du coupe-agrume. Par après, l'on tournera le couvercle, voir la figure 6a. En effet, lorsque la demi-portion d'agrume 26 est complètement enfoncée dans et au travers les cadres 66 et 68, les lames 62 sont alors ancrées dans la pulpe U. Puisque les lames 62 sont aussi ancrées au support annulaire de base, 48, et puisque les lames 62 ne rejoignent pas l'écorce E alors que les couteaux 40 sont d'une épaisseur telle que les bords tranchants 76 engagent l'écorce E avec le corps principal de ces couteaux en 40 qui passe au travers la section périphérique extérieure de la pulpe U, lorsque le cadre extérieur 66 tourne y compris les bords tranchants 76, la section périphérique de pulpe U est cisaillée par le bord biseauté 73. On obtient par conséquent un râpage net de la face intérieure de l'écorce du fruit, et les quartiers de pulpe tombent alors librement dans le bol 42.

Le coupe-agrume est complètement démontable, car toutes les pièces constituant ce dispositif de segmentation et de dégagement de pulpe de l'écorce peuvent être séparées les unes des autres, si on veut les nettoyer.

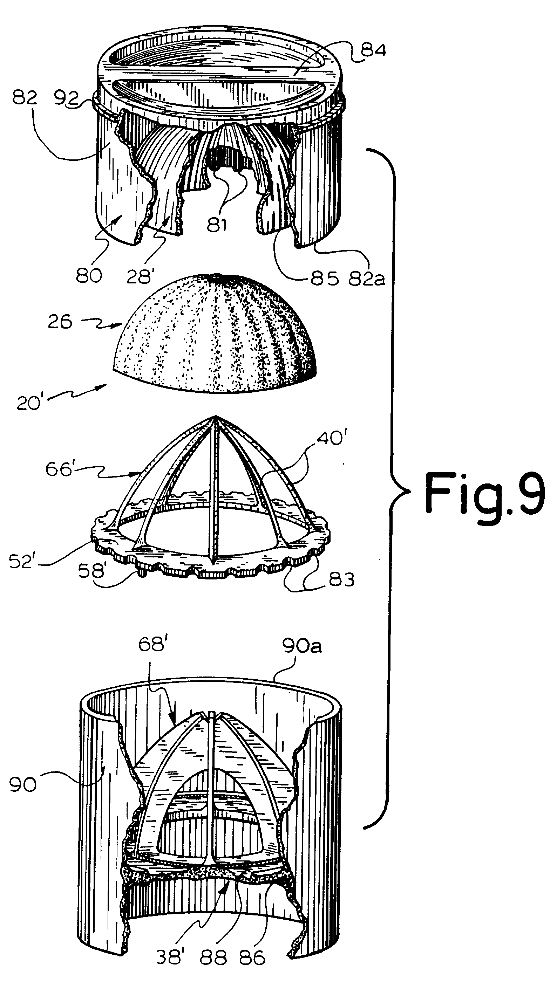

Une seconde réalisation de l'invention est montrée en 20′ aux figures 9 à 15. Le couvercle 28′ est en forme de dôme et est ancré par son apex coaxialement à la paroi de dessous 78 d'un grand bol cylindrique 80, et aussi au bord circulaire de son ouverture de dessous 82a. La paroi 78 est décalée vers l'intérieur par rapport à l'extrémité correspondante de la paroi cylindrique principale 82 du bol 80, et une partie saillante radialement centrale, 84, fait saillie vers l'extérieur de la paroi 78. La partie saillante 84 forme une poignée pour faciliter la rotation du bol 80. Le bord inférieur 82a du corps 82 dépasse le niveau du bord inférieur 85 du couvercle 28. Le bord inférieur 85 comprend au surplus une pluralité d'oreilles tournées vers l'intérieur, 81, destinées à engager un nombre correspondant d'encoches 83 ménagées dans le bord extérieur périphérique de dessous de la plaque annulaire 52′ du cadre 66′, lorsqu'une demi-section d'agrume est appuyée sur le cadre 66′ et lorsque le couvercle 28′ est appuyé sur l'agrume. Les oreilles 81 et les encoches 83 constituent des moyens d'ancrage amovibles entre le couvercle 28′ et les couteaux 66′.

Le support annulaire 38′ du cadre intérieur 68′ comprend une plaque périphérique radialement tournée vers l'extérieur, 86, ayant une cavité courbée ou voie 88 pour l'engagement coulissant d'au moins une goupille dirigée vers le bas, 58′, faisant saillie de la surface périphérique de la plaque annulaire de dessous 52′ du cadre 66′. Le cadre intérieur 68′ est entouré et supporté par un cadre-manchon 90, ancré en une portion intermédiaire de celui-ci au bord périphérique extérieur de la plaque annulaire 86 coaxialement à celle-ci. Le diamètre du couvercle 82 est plus petit que celui du cylindre de base 90, de sorte que le premier peut s'insérer dans le second; un rebord extérieur 92 à la section supérieure du corps 82 viendra alors s'appuyer sur le bord supérieur 90a du cylindre de base 90, de sorte que le bord de dessous 82a du corps 82 s'arrêtera en-deçà de la face de dessus de la plaque annulaire 86.

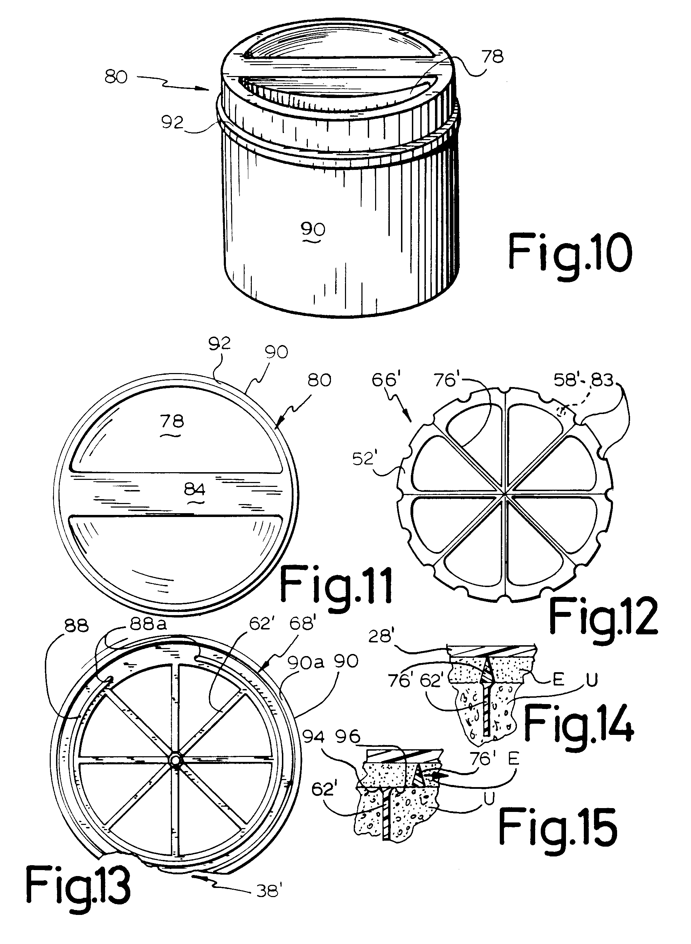

Lorsque la goupille 58′ rejoint l'un ou l'autre des extrémités 88a du sillon 88 (figure 13), les couteaux 76′ s'aligneront avec les sections de râpage des lames, 62′, (figure 14), ce qui permettra aux couteaux 76 de s'enfoncer dans la pulpe U et à engager l'écorce E.

Dès lors, l'ingéniosité inventive de cette invention demeure la même, à savoir, que la demi-section de l'agrume 26 est saisie en sandwich entre le couvercle 28′ et les couteaux 66′, et les couteaux sont appuyés sur les lames 68′, afin de diviser en quartiers la pulpe; et le bol 82 est tourné, de façon à râper l'intérieur de l'écorce du fruit, pour en dégager la pulpe. Lorsque la pulpe a été complètement divisée en quartiers, le couvercle 28′ et les couteaux 66′ deviennent temporairement solidaires grâce aux moyens de barrure 81, 83; les lames 68′ étant ancrées à leur périphérie au cadre-manchon de support 90; de sorte que le premier agencement solidaire 82, 28′, 26, 66′ peut tourner par rapport au second agencement solidaire 68′, 90, grâce aux moyens de déplacement relatif 58′, 88. La pulpe, lorsque elle est en train d'être divisée en quartiers et dégagée de l'écorce, peut être récupérée sous les lames 68′ grâce à une tasse réceptrice 42 ou semblable, comme dans la première réalisation.

Tel qu'illustré aux figures 14, 15, l'extrémité radialement extérieure de chaque lame 62′ peut avoir deux bords biseautés opposés, 94, 96, au lieu d'un, comme dans le premier modèle, afin de permettre un effet de cisaillement selon l'une ou l'autre des deux directions de rotation des couteaux 40′ par rapport aux lames 62.

Notre dispositif coupe-agrume peut s'adapter à des agrumes de dimensions variées, grâce à la forme courbée des couteaux 40 ou 40′ et des lames 62 ou 62′. Ceci est suggéré à la figure 1, en ce que les dessins révèlent que, avec des diamètres croissants de demi-sections d'agrumes, la surface du cadre extérieur 66 recouverte par l'écorce E du fruit 26 s'accroîtra progressivement, entre des diamètres limites minimum et maximum dont la valeur sera déterminée par la surface des bords tranchants incidents des couteaux 40 ou 40′.

Les tronçons de bords de lame 72 sont préférablement réalisés en acier inoxydable, alors que les autres parties de notre coupe-agrume sont préférablement réalisées en un matériau plastique rigide.

## Revendications

1. Un dispositif coupe-agrume pour diviser en quartiers la pulpe d'une demi-section d'agrume et pour en dégager la pulpe de l'écorce, de façon à pouvoir récupérer les quartiers de pulpe, ledit coupe-agrume comprenant: un organe annulaire rigide (48); une première grande bague (64, 52') en un morceau, un certain nombre de couteaux courbés (40), espacés, faisant saillie vers le haut à partir de ladite première bague à laquelle ils sont raccordés, lesdits couteaux courbés (40) convergeant vers une région commune d'apex où ils fusionnent, ladite première bague (64, 52') et lesdits couteaux courbés (40) constituant un cadre ouvert extérieur (66), généralement semi-sphérique, ladite première bague (64, 52') étant coaxiale audit organe annulaire (48) et librement installée sur celui-ci, chacun desdits couteaux (40) ayant un bord de segmentation allongé (76), extérieur, biseauté, aiguisé, dirigé radialement vers l'extérieur et du côté opposé de ladite première bague; une deuxième grande bague (52); un certain nombre de lames courbées (62, 62') espacées, faisant saillie vers le haut à partir de ladite seconde bague et raccordées à celle-ci, convergeant vers une région commune d'apex au niveau de laquelle elles sont raccordées, le nombre desdites lames (62, 62') étant identique au nombre desdits couteaux (40), ladite deuxième bague (52) et lesdites lames (62, 62') constituant un cadre ouvert intérieur (68), généralement semi-sphérique, lesdites lames étant situées radialement à l'intérieur desdits couteaux, ladite seconde bague étant coaxiale audit organe annulaire et installée sur celui-ci, chacune desdites lames (62', 62') ayant un premier bord tranchant (73, 94), extérieur, de rapage d'écorce; des moyens de coulissement (60, 64, 74) pour permettre audit cadre extérieur (66) de tourner par rapport audit organe annulaire (48) autour du centre de celui-ci selon une direction de râpage d'écorce; des moyens de barrure (56, 58) pour barrer ledit cadre intérieur (68) audit organe annulaire (48); chaque lame occupant une position masquée à l,intérieur d'un couteau contigu correspondant, selon une position initiale de rotation dudit cadre extérieur, lesdits bords de râpage étant transversaux auxdits bords de segmentation (76) des couteaux et dirigés du côté opposé à ladite direction de rotation de râpage d'écorce dudit cadre extérieur; de sorte que le dispositif puisse être utilisé d'une façon telle que, lorsque ledit cadre extérieur occupe ladite position initiale de rotation, la face plate de ladite demi-section d'agrume est appuyée directement sur ledit cadre extérieur et enfoncée complètement dans celui-ci pour diviser en quartiers ladite pulpe grâce auxdits bords de segmentation (76) des couteaux, et l'écorce est par la suite tournée à la main selon ladite direction de râpage d'écorce, de façon à entrainer en même temps ledit cadre extérieur (66) mais pas ledit cadre intérieur (68) lequel est barré audit organe annulaire (48), afin de dégager la pulpe de l'agrume de son écorce au moyen desdits bords de râpage (73, 94) d'écorce des lames (62, 62').

2. Un coupe-agrume tel que défini à la revendication 1, comprenant au surplus une base (34, 36) destinée à être positionnée sur une surface horizontale de support, afin de supporter ledit organe annulaire de façon espacée au-dessus de ladite surface.

3. Un coupe-agrume tel que défini à la revendication 1, caractérisé en ce que chacun desdits bords de segmentation (76) des couteaux (40) définissent une section formant un V.

4. Un coupe-agrume tel que défini à la revendication 3, caractérisé en la que chaque couteau (40) dégage lesdites lames (62') dans toutes les positions de rotation dudit cadre extérieur (66), avec chacune desdites lames (62') comprenant au surplus un second bord de râpage d'écorce (96) opposé au premier bord (94), les deux bords de râpage d'écorce (94, 96) étant masqués par et contigus audit couteau (40) dans ladite position initiale de rotation dudit cadre extérieur (66), de sorte qu'il y aura deux directions de râpage d'écorce d'agrume pour la rotation dudit cadre extérieur.

5. Un coupe-agrume tel que défini à la revendication 1, comprenant au surplus un grand organe de couvercle rigide et semi-sphérique (28, 28'), ledit organe de couvercle ayant un orifice (30) relativement grand à sa portion d'apex, ledit organe de couvercle recouvrant ladite demi-section d'agrume durant les opérations de segmentation et de râpage d'écorce et facilitant sa rotation manuelle.

6. Un coupe-agrume tel que défini à la revendication 2, caractérisé en ce que ledit support (34, 36) comporte des pattes non-glissantes (46) réalisées en matériau élastomérique, afin d'engager ladite surface de support.

7. Un coupe-agrume tel que défini à la revendication 1, caractérisé en ce que lesdits moyens de coulissement (60, 64, 74) comprennent: une cavité annulaire (60) réalisée sur la face supérieure de ladite seconde bague (52) en un morceau, de sorte que ladite première bague (64) en un morceau desdits couteaux (40) s'accouple de façon amovible et coulissante dans ladite cavité annulaire (60).

8. Un coupe-agrume tel que défini à la revendication 1, caractérisé en ce que lesdits moyens de barrure (56, 58) sont amovibles et comprennent un certain nombre de goupilles (58), chacune faisant saillie vers le bas à partir de ladite seconde bague (52) en un morceau, et au moins autant de cavités (56), réalisées dans la surface de dessus dudit organe annulaire (48), afin de recevoir lesdites goupilles (58).

9. Un coupe agrume tel que défini à la revendication 5, caractérisé en ce que ladite bague (52') en un morceau du cadre ouvert extérieur (66) comprend une pluralité d'encoches (83) à sa périphérie, et ledit organe de couvercle semi-sphérique (28') comprend une pluralité d'oreilles périphériques (81) de dessous dirigées vers l'intérieur, lesdites oreilles (81) étant destinées à s'accoupler de façon amovible avec lesdites encoches (83) lorsque ladite demi-section de fruit a été complètement enfoncée dans ledit cadre ouvert extérieur (66) et lorsque ledit organe de couvercle (28') est complètement inséré autour de ladite demi-section de fruit; et en ce que lesdits moyens de coulissement (60, 64, 74) comprennent une cavité courbée (88), ménagée dans la face de dessus d'une partie (86) faisant saillie radialement vers l'extérieur de ladite seconde bague (52) en un morceau, et au moins une goupille (58'), faisant saillie vers le bas à partir de ladite première bague (52') en un morceau et engagée de façon amovible dans cette dernière cavité courbée (88) de façon à pouvoir y coulisser.

10. Un coupe-agrume tel que défini à la revendication 3, caractérisé en ce que chaque couteau (40) comporte une partie radialement intérieure sur la chemin desdites lames (62, 62'), celles-ci venant accoter lesdites parties de couteau lorsque ledit cadre extérieur (66) occupe sa position initiale de rotation.

## Claims

1. A citrus-fruit cutting device for dividing into quarters the pulp of a half-section of citrus fruit and for separating the pulp from the peel, so as to be able to recover the quarters of pulp, said citrus-fruit cutter comprising: a rigid annular member (48); a first large ring (64, 52') in one piece, a certain number of spaced-apart curved cutters (40) projecting upwardly from said first ring to which they are connected, said curved cutters (40) converging towards a common apex region where they join, said first ring (64, 52') and said curved cutters (40) constituting a generally semi-spherical, outer open frame (66), said first ring (64, 52') being coaxial to said annular member (48) and freely installed thereon, each of said cutters (40) having an outside elongated segmentation edge (76) which is bevelled, sharpened, directed radially towards the outside and opposite said first ring; a second large ring (52); a certain number of spaced-apart curved blades (62, 62') projecting upwardly from said second ring and connected thereto, converging towards a common apex region at the level of which they are connected, the number of said blades (62, 62') being identical to the number of said cutters (40), said second ring (52) and said blades (62, 62') constituting a generally semi-spherical, inner open frame (68), said blades being located radially inside said cutters, said second ring being coaxial to said annular member and installed thereon, each of said blades (62, 62') having a first outer cutting edge (73, 94) for grating peel; sliding means (60, 64, 74) for allowing said outer frame (66) to rotate with respect to said annular member (48) about the centre thereof in a peel-grating direction; barring means (56, 58) for barring said inner frame (68) on said annular member (48); each blade occupying a concealed position inside a corresponding contiguous cutter, in an initial position of rotation of said outer frame, said grating edges being transverse to said segmentation edges (76) of the cutters and directed opposite said direction of rotation for grating peel of said outer frame; with the result that the device may be used so that, when said outer frame occupies said initial position of rotation, the flat face of said half-section of citrus fruit is applied directly on said outer frame and completely driven therein to divide said pulp into quarters thanks to said segmentation edges (76) of the cutters, and the peel is subsequently turned by hand in said peel-grating direction so as to drive at the same time said outer frame (66) but not said inner frame (68) which is barred on said annular member (48), in order to separate the pulp of the citrus fruit from its peel by means of said peel-grating edges (73, 94) of the blades (62, 62').

2. A citrus-fruit cutter as defined in Claim 1, further comprising a base (34, 36) intended to be positioned on a horizontal support surface in order to support said annular member in manner spaced above said surface.

3. A citrus-fruit cutter as defined in Claim 1, characterized in that each of said segmentation edges (76) of the cutters (40) define a V-section.

4. A citrus-fruit cutter as defined in Claim 3, characterized in that each cutter (40) disengages said blades (62') in all the positions of rotation of said outer frame (66), with each of said blades (62') further comprising a second peel-grating edge (96) opposite the first edge (94), the two peel-grating edges (94, 96) being concealed by and contiguous with said cutter (40) in said initial position of rotation of said outer frame (66), so that there will be two directions of citrus-fruit peel grating for the rotation of said outer frame.

5. A citrus-fruit cutter as defined in Claim 1, further comprising a rigid, semi-spherical, large lid member (28, 28'), said lid member having a relatively large orifice (30) in its apex portion, said lid member covering said half-section of citrus-fruit during the operations of segmentation and of peel-grating and facilitating manual rotation thereof.

6. A citrus-fruit cutter as defined in Claim 2, characterized in that said support (34, 36) comprises non-sliding tabs (46) made of elastomeric material, in order to engage said support surface.

7. A citrus-fruit cutter as defined in Claim 1, characterized in that said sliding means (60, 64, 74) comprise: an annular cavity (60) made on the upper face of said second ring (52) in one piece, with the result that said first one-piece ring (64) of said cutters (40) couples in removable and sliding manner in said annular cavity (60).

8. A citrus-fruit cutter as defined in Claim 1, characterized in that said barring means (56, 58) are removable and comprise a certain number of pins (58), each projecting downwardly from said second one-piece ring (52), and at least as many cavities (56) made in the top surface of said annular member (48) in order to receive said pins (58).

9. A citrus-fruit cutter as defined in Claim 5, characterized in that said one-piece ring (52') of the outer open frame (66) comprises a plurality of notches (83) on its periphery, and said semi-spherical lid member (28') comprises a plurality of underneath peripheral lugs (81) directed inwardly, said lugs (81) being intended to couple in removable manner with said notches (83) when said half-section of fruit has been completely driven in said outer open frame (66) and when said lid member (28') is completely inserted around said half-section of fruit; and in that said sliding means (60, 64, 74) comprise a curved cavity (88) made in the top face of a part (86) projecting radially towards the outside of said second one-piece ring (52), and at least one pin (58') projecting downwardly from said first one-piece ring (52') and removably engaged in this latter curved cavity (88) so as to be able to slide therein.

10. A citrus-fruit cutter as defined in Claim 3, characterized in that each cutter (40) comprises a radially inside part on the path of said blades (62, 62'), the latter leaning against said cutter parts when said outer frame (66) occupies its initial position of rotation.

## Patentansprüche

1. Messer zum Schälen von Citrusfrüchten zur Teilung des Fruchtfleisches einer Citrusfruchthälfte in Stücke und zum Herauslösen des Fruchtfleisches von der Schale, so daß die Fruchstücke aufgefangen werden können, wobei das Messer zum Schälen von Citrusfrüchten aufweist:
- ein ringförmiges, starres Element (48);
- einen ersten, großen, einstückigen Ring (64, 52') mit einer gewissen Anzahl von gebogenen, voneinander beabstandeten Messern (40), die von dem ersten Ring, mit dem sie verbunden sind, nach oben vorspringen und zu einer gemeinsamen Spitze hin konvergieren, wo sie zusammenlaufen, wodurch der erste Ring (64, 52') und die gebogenen Messer (40) einen offenen äußeren, im allgemeinen halbschalenförmigen Rahmen (66) bilden und der erste Ring (64, 52') koaxial zum ringförmigen Element (48) und frei beweglich auf diesem installiert ist, und jedes Messer (40) eine längliche, äußere, abgeschrägte, geschliffene Trennkante (76) hat, die von der gegenüberliegenden Seite des ersten Ringes radial nach außen gerichtet ist;
- einen zweiten großen Ring (52);
- eine gewisse Anzahl gebogener, voneinander beabstandeter Klingen (62, 62'), die nach oben von dem zweiten Ring weg vorspringen und mit diesem verbunden sind und zu einer gemeinsamen Spitze konvergieren, auf dessen Höhe sie zusammenlaufen, wobei die Anzahl der Klingen (62, 62') identisch ist mit der Anzahl Messer (40), und der zweite Ring (52) und die Klingen (62, 62') einen offenen, inneren, im allgemeinen halbschalenförmigen Rahmen (68) bilden, wobei die Klingen radial innerhalb der Messer gelegen sind und der zweite Ring koaxial zu dem ringförmigen Element und auf diesem befestigt ist und jede Klinge (62, 62') einen ersten, äußeren Schneiderand (73, 94) zum Abtrennen der Schale hat;
- Führungsmittel (60, 64, 74), um eine Drehung des äußeren Rahmens (66) in bezug auf das ringförmige Element um dessen Mittelpunkt in eine Richtung zum Abtrennen der Schale zu ermöglichen;
- Arretiermittel (56, 58), um den inneren Rahmen (68) mit dem ringförmigen Element (48) zu arretieren;
- jede Klinge sitzt an einer Position, die nach innen durch entsprechend benachbarte Messer abgedeckt ist entsprechend einer Anfangsrotationsstellung des äußeren Rahmens, wobei die Schneidränder zum Abtrennen der Schale senkrecht zu den Trennkanten (76) der Messer und entgegen der Drehrichtung des äußeren Rahmens gerichtet sind;
- wenn der äußere Rahmen die Anfangsrotationsstellung einnimmt, wird die Schnittfläche der Citrusfruchthälfte direkt auf den äußeren Rahmen gedrückt und vollständig in diesen eingedrückt, um das Fruchtfleisch mit den Trennkanten (76) der Messer in Stücke zu teilen, und dann wird die Schale mit der Hand in die ein Abtrennen der Schale bewirkende Richtung gedreht, so daß bei gleichzeitigem Mitführen des äußeren Rahmens (66), aber nicht des inneren Rahmens (68), der mit dem ringförmigen Element (48) arretiert ist, das Fruchtfleisch der Citrusfrucht aus ihrer Schale mittels der Schneidränder (73, 94) der Klingen (62, 62') herausholbar ist.

2. Messer zum Schälen von Citrusfrüchten nach Anspruch 1, gekennzeichnet durch eine Basisplatte (34, 36), die auf einer Unterlage mit ebener Oberfläche abstellbar ist, um das ringförmige Element im Abstand zur Oberfläche der Unterlage zu halten.

3. Messer zum Schälen von Citrusfrüchten nach Anspruch 1, dadurch gekennzeichnet, daß jede Trennkante (76) der Messer (40) einen V-förmigen Abschnitt definiert.

4. Messer zum Schälen von Citrusfrüchten nach Anspruch 3, dadurch gekennzeichnet, daß jedes Messer (40) in allen Rotationsstellungen des äußeren Rahmens (66) die Klingen (62') freilegt, wobei jede der Klingen (62') im übrigen eine zweite Schneidekante (96) zum Abtrennen der Schale der ersten schneidekante (94) gegenüberliegend aufweist und daß die zwei Kanten (94, 96) zum Abtrennen der Schale in der Anfangsrotationsstellung des äußeren Rahmens (66) durch das benachbarte Messer (40) verdeckt sind, so daß es zwei Richtungen gibt, die Schale der Zitrusfrucht durch die Rotation des äußeren Rahmens zu trennen.

5. Messer zum schälen von Citrusfrüchten nach Anspruch 1, gekennzeichnet durch eine große, starre und halbschalenförmige Kappe (28, 28'), die eine relativ große Öffnung (30) an ihrer Spitze aufweist und die Zitrusfruchthälfte während der Teilung und Abtrennung der Schale abdeckt und die manuelle Rotation erleichtert.

6. Messer zum Schälen von Citrusfrüchten nach Anspruch 2, dadurch gekennzeichnet, daß die Basisplatte (34, 36) rutschfeste Füße (46) aus einem elastomeren Material aufweist, um die Basisplatte auf der Oberfläche der Unterlage festzulegen.

7. Messer zum Schälen von Citrusfrüchten nach Anspruch 1, dadurch gekennzeichnet, daß die Führungsmittel (60, 64, 74): eine ringförmige Aussparung (60) auf der oberen Fläche des zweiten, einstückigen Ringes (52) aufweisen, so daß der erste einstückige Ring (64) mit den Messern (40) beweglich und in der ringförmigen Aussparung (60) führbar mit dem zweiten Ring gekuppelt ist.

8. Messer zum Schälen von Citrusfrüchten nach Anspruch 1, dadurch gekennzeichnet, daß die Arretiermittel (56, 58) herausnehmbar sind und eine gewisse Anzahl Stifte (58) aufweisen, von denen jeder nach unten aus dem zweiten einstückigen Ring (52) herausragt und die Arretiermittel mit ebenso vielen Ausnehmungen (56) versehen sind, die von oben in die Oberfläche des ringförmigen Elementes (48) eingebracht sind, um die stifte (58) aufzunehmen.

9. Messer zum Schälen von Citrusfrüchten nach Anspruch 5, dadurch gekennzeichnet, daß der einstückige Ring (52') des offenen äußeren Rahmens (66) auf seinem äußeren Rand eine Vielzahl von Einkerbungen (83) aufweist und die halbschalenförmige Kappe (28') mit einer Vielzahl von nach innen gerichteten Erhebungen (81) entlang des unteren Randes der Kappe versehen ist, wobei die Erhebungen (81) lösbar mit den Einkerbungen (83) kuppelbar sind, wenn die Fruchthälfte vollständig in den äußeren, offenen Rahmen (66) eingedrückt ist und wenn die Kappe (28') vollständig die Fruchthälfte aufgenommen hat;
und daß die Führungsmittel (60, 64, 74) eine gebogene, entlang der Umfangsrichtung verlaufende Ausnehmung (88) aufweisen, die von oben in die Oberfläche eines Teils (86) eingebracht ist, das radial nach außen von dem zweiten, einstückigen Ring absteht, sowie wenigstens einen Stift (58') aufweisen, der nach unten von dem ersten, einstückigen Ring (52') abragt und beweglich mit dieser gebogenen Ausnehmung (88) in Eingriff bringbar ist, so daß der erste Ring führbar ist.

10. Messer zum Schälen von Citrusfrüchten nach Anspruch 3, dadurch gekennzeichnet, daß jedes Messer (40) einen radial nach innen in Richtung der Klingen (62, 62') gerichteten Teil aufweist, an den sich diese in der Rotationsausgangsstellung des äußeren Rahmens (66) abstützen.
